# EUROPÄISCHE PATENTANMELDUNG

(11) **EP 1 837 112 A1**
(43) Veröffentlichungstag der Anmeldung: **26.09.2007**
(21) Anmeldenummer: 06006138.9
(22) Anmeldetag: 24.03.2006
(51) Int. Cl.: B23H 1/00, B23H 9/10, B23H 7/08

(54) **Elektrodenanordnung für die funkenerosive Bearbeitung eines elektrisch nichtleitenden Materials**

(71) Anmelder: SIEMENS AKTIENGESELLSCHAFT, 80333 München (DE); Albert-Ludwigs-Universität Freiburg, 79085 Freiburg (DE)
(72) Erfinder: Förster, Ralf, 12623 Berlin (DE); Klein, Karsten, 14089 Berlin (DE); Laudien, Ulrich, 10555 Berlin (DE); Settegast, Silke, 10439 Berlin (DE); Subramanian, Ramesh, 10777 Berlin (DE)

(57) **Zusammenfassung**

Die Erfindung betrifft ein Verfahren zur funkenerosiven Bearbeitung eines elektrisch nichtleitenden Materials (1), bei dem auf dem elektrisch nichtleitenden Material (1) eine Schicht aus einer elektrisch leitenden Substanz als Assistenzelektrode (2) aufgebracht wird, dadurch gekennzeichnet, dass die elektrisch leitende Substanz nach der funkenerosiven Bearbeitung durch oxidative Wärmebehandlung chemisch umgewandelt wird.

## Beschreibung

Die Erfindung betrifft ein Verfahren zur funkenerosiven Bearbeitung eines elektrisch nichtleitenden Materials, bei dem auf dem elektrisch nichtleitenden Material eine Schicht aus einer elektrisch leitenden Substanz als Assistenzelektrode aufgebracht wird.

Funkenerosive Bearbeitungsverfahren für elektrisch nichtleitende Materialien sind im Stand der Technik bekannt. Sie werden u.a. eingesetzt, um in Bauteilen, die mit einer keramischen Beschichtung versehen sind, Bohrungen zu erstellen. So werden etwa bei Turbinenschaufeln, die eine keramische Wärmedämmschicht auf einem metallischen Grundkörper aufweisen, Kühlluftbohrungen durch Funkenerosion erstellt.

In der DE 41 02 250 A1 ist allgemein ein Verfahren zur funkenerosiven Bearbeitung elektrisch nichtleitender Materialien beschrieben. Bei diesem Verfahren wird das nichtleitende Material vor seiner Bearbeitung mit einer elektrisch leitenden Substanz beschichtet. Diese Schicht wird als Assistenzelektrode verwendet, die bei der funkenerosiven Bearbeitung eine elektrische Kontaktierung zu einer Arbeitselektrode herstellt. Das mit der Assistenzelektrode beschichtete, elektrisch nichtleitende Material und zumindest der zur Assistenzelektrode weisende Endbereich der Arbeitselektrode, an dem es bei der Bearbeitung zur Funkenentladung kommt, sind in ein Dielektrikum getaucht, das durch eine Flüssigkeit wie Kerosin oder auch ein Gas gebildet wird.

Wenn an die Anordnung eine Spannung angelegt wird, kommt es zwischen der Arbeitselektrode und der Assistenzelektrode zu einer Funkenentladung und in der Folge zu einem Abtrag der Assistenzelektrode sowie des darunterliegenden elektrisch nichtleitenden Materials. Gleichzeitig wird ein Teil des Dielektrikums gecrackt, wodurch Kohlenstoff oder leitfähige Carbide entstehen, die in Form einer elektrisch leitfähigen Schicht auf den freigelegten Oberflächenbereichen des nichtleitenden Materials abgeschieden werden. Die so abgeschiedene, elektrisch leitende Schicht ersetzt somit das abgetragene Material der Assistenzelektrode und stellt bei einem Vordringen der Arbeitselektrode in das nichtleitende Material eine leitende Verbindung zu der Oberfläche des nichtleitenden Materials her, so dass eine kontinuierliche Bearbeitung möglich ist.

Nachteil dieses Verfahrens ist, dass die Schicht aus der elektrisch leitenden Substanz, welche die Assistenzelektrode bildet, nach der funkenerosiven Bearbeitung aufwändig entfernt werden muss. Es können zusätzlich Probleme auftreten, wenn zurückbleibende Reste der elektrisch leitenden Substanz in der Art mit dem elektrisch nichtleitenden Material wechselwirken, das sie dessen Qualität und Beständigkeit beeinträchtigen. Im schlimmsten Fall können die Reste der elektrisch leitenden Substanz während des Betriebes mit dem elektrisch nichtleitenden Material reagieren und so zu dessen Beschädigung führen.

Aufgabe der vorliegenden Erfindung ist es, ein Verfahren zur funkenerosiven Bearbeitung eines elektrisch nichtleitenden Materials bereitzustellen, bei dem aufwändige Nachbearbeitungen nicht erforderlich sind.

Die Aufgabe wird erfindungsgemäß durch ein Verfahren zur funkenerosiven Bearbeitung eines elektrisch nichtleitenden Materials gelöst, bei dem die elektrisch leitende Substanz nach der funkenerosiven Bearbeitung durch beispielsweise oxidative Wärmebehandlung chemisch umgewandelt wird. Grundgedanke des erfindungsgemäßen Verfahrens ist es also, eine elektrisch leitende Substanz als Assistenzelektrode zu verwenden, die nach Beendigung der funkenerosiven Bearbeitung chemisch umgewandelt wird, insbesondere oxidiert und so entweder entfernt wird oder aber in einer Form vorliegt, die die Eigenschaften des elektrisch nichtleitenden Materials nicht beeinträchtigen.

Ein Vorteil des Verfahrens ist, dass das elektrisch nichtleitende Material nach der funkenerosiven Bearbeitung nicht aufwändig von der elektrisch leitenden Substanz gereinigt werden muss, und vor allem auch nicht die Gefahr besteht, dass zurückbleibende Reste der Substanz die Qualität des elektrisch nichtleitenden Materials beeinträchtigen können.

In einer Ausführungsform der Erfindung ist die elektrisch leitende Substanz eine organische Verbindung, wie z.B. ein elektrisch leitendes Polymer. Vorteil ist hier, dass das Polymer schnell und einfach in Form einer Lösung aufgebracht werden kann, wobei das Lösungsmittel verdampft und eine elektrisch leitende Schicht auf der Oberfläche zurückbleibt.

Die elektrisch leitende Substanz kann auch durch oxidative Wärmebehandlung in zumindest eine gasförmige Verbindung umgewandelt werden. Auf diese Weise kann sie besonders einfach von dem elektrisch nichtleitenden Material entfernt werden. Organische Verbindungen können beispielsweise zu gasförmigem CO₂ und Wasser verbrannt werden, die dann als Gas von selbst entweichen und so kein Rückstand zurückbleibt.

Versuche haben gezeigt, dass das erfindungsgemäße Verfahren sehr gut für die Bearbeitung von Keramiken, insbesondere von Keramiken, die ein Metalloxid enthalten oder daraus bestehen, geeignet ist. Dies gilt bevorzugt, wenn das Metalloxid Zirkoniumoxid ist.

Die elektrisch leitende Substanz kann ein Metall sein, das auch in dem Metalloxid der Keramik enthalten ist. Um es während der funkenerosiven Bearbeitung vor Oxidation zu schützen, können inerte Dielektrika wie Kerosin verwendet werden, die das Metall vollständig bedecken. Da auf diese Weise im Wesentlichen keine Oxidation stattfindet, bleibt auch die elektrische Leitfähigkeit des Metalls erhalten.

Wenn die elektrisch leitende Substanz ein Metall ist, das in dem Metalloxid enthalten ist, kann das Metall leicht durch oxidative Wärmebehandlung in das Metalloxid umgewandelt werden, so dass es als ein identischer Bestandteil des elektrisch nichtleitenden Materials vorliegt. Auf diese Weise ist sichergestellt, dass die umgewandelte Substanz die Eigenschaften des elektrisch nichtleitenden Materials nicht negativ beeinflussen kann.

Da viele keramische Wärmedämmschichten Zirkoniumoxid enthalten, hat es sich als vorteilhaft erwiesen, wenn als elektrisch leitende Substanz metallisches Zirkonium verwendet wird. Dieses kann dann bei hohen Temperaturen und der Anwesenheit von Sauerstoff in Zirkoniumoxid umgewandelt werden und wird so zu einem integralen Bestandteil der Wärmedämmschicht.

Mit Hilfe des erfindungsgemäßen Verfahrens können Beschichtungen aus einem elektrisch nichtleitenden Material auf einem Bauteil funkenerosiv bearbeitet werden. Dies gilt insbesondere, wenn es sich bei der Beschichtung um eine Wärmedämmschicht etwa auf einem Teil einer Turbine oder Brennkammer, wie z.B. eine Lauf- oder Leitschaufel, handelt. In diesem Fall kann nämlich in vorteilhafter Weise die elektrisch leitende Substanz nach der funkenerosiven Bearbeitung durch oxidative Wärmebehandlung in einen integralen Bestandteil der Wärmedämmschicht umgewandelt werden. Die Wärmebehandlung kann insbesondere bei Teilen von Turbinen oder Brennkammern leicht dadurch erfolgen, dass sie ausgebrannt werden oder sie in Betrieb genommen werden. Dabei treten so hohe Temperaturen auf, dass die oxidative Umwandlung erfolgt.

Das erfindungsgemäße Verfahren wird im Folgenden anhand von zwei Zeichnungen näher erläutert.

Es zeigen:
- Figur 1: eine Anordnung für die Durchführung des Verfahrens zur funkenerosiven Bearbeitung von elektrisch nicht leitenden Materialien gemäß der vorliegenden Erfindung in schematischer Darstellung vor dem Beginn der Bearbeitung,
- Figur 2: die Anordnung aus Figur 1 während der Bearbeitung,
- Figur 3: eine Gasturbine,
- Figur 4: eine Turbinenschaufel und
- Figur 5: eine Brennkammer.

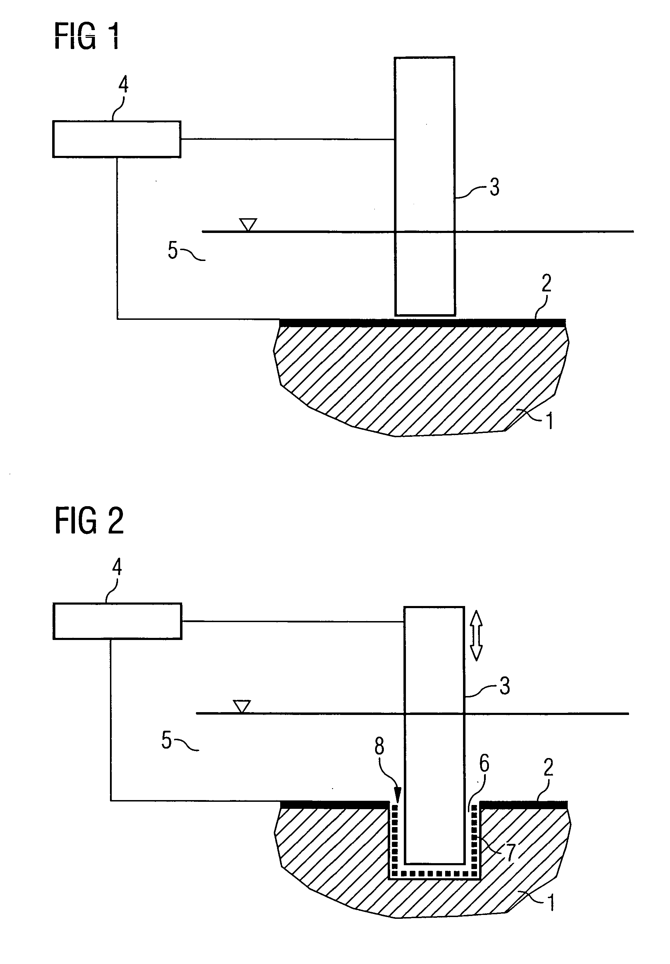

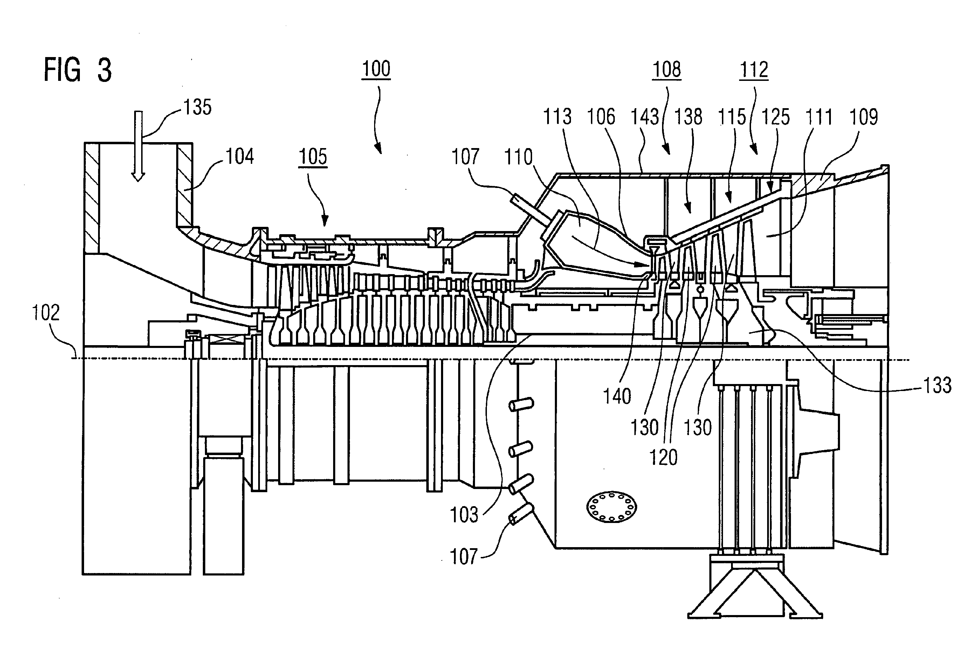

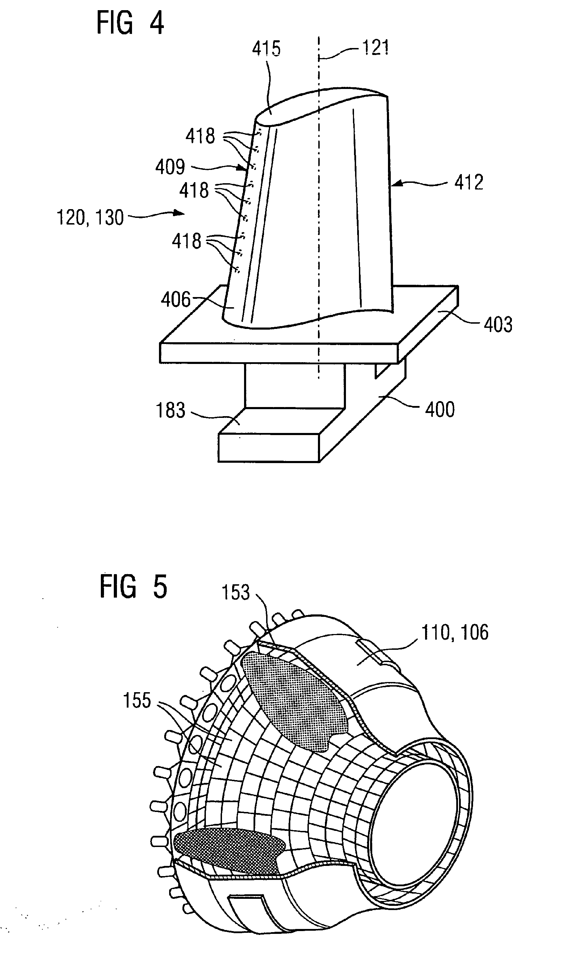

Die Figur 1 zeigt eine Anordnung für die Durchführung des erfindungsgemäßen Verfahrens zur funkenerosiven Bearbeitung von elektrisch nichtleitenden Materialien, hier in Form eines Bauteils 1, das aus Keramik besteht, die Zirkoniumoxid enthält. Das Bauteil 1 kann Teil einer Turbine oder einer Brennkammer, z.B. eine Lauf- 120 (Fig. 3, 4) oder Leitschaufel 130 (Fig. 3, 4) sein. Es ist auch möglich, dass das elektrisch nichtleitende Material eine Beschichtung auf einem metallischen Grundkörper einer Turbinenschaufel bildet, wobei sie auch als eine Wärmedämmschicht ausgeführt sein kann.

Auf dem Bauteil 1 ist flächig eine Schicht aus metallischem Zirkonium als eine Assistenzelektrode 2 aufgebracht. Alternativ kann als elektrisch leitende Substanz auch eine organische Verbindung verwendet werden.

Die Assistenzelektrode 2 und eine Arbeitselektrode 3 sind elektrisch leitend mit einem Generator 4 verbunden, der an beide Elektroden 2, 3 eine geeignete Spannung anlegt. Die Elektroden 2, 3 sind in unmittelbarer Nähe zueinander angeordnet und in ein Dielektrikum 5 getaucht, bei dem es sich beispielsweise um Kerosin oder eine weitere im Stand der Technik beschriebene Flüssigkeit handeln kann.

Um das Bauteil 1 mit Hilfe des erfindungsgemäßen funkenerosiven Verfahrens zu bearbeiten, wird in einem ersten Schritt die Assistenzelektrode 2 etwa mit Hilfe von PVD (Physical Vapour Deposition) aufgebracht und dann gemeinsam mit der Arbeitselektrode 3 elektrisch mit dem Generator 4 verbunden. Anschließend wird das Bauteil 1 sowie zumindest der untere Teil der Arbeitselektrode 3 in das Dielektrikum 5 getaucht. Das Dielektrikum 5 schützt die Assistenzelektrode 2 aus metallischem Zirkonium während der funkenerosiven Bearbeitung vor Oxidation.

Nachdem die Arbeitselektrode 3 in unmittelbare Nähe zu der Assistenzelektrode 2 gebracht worden ist und eine geeignete Spannung an die Elektroden 2, 3 angelegt wurde, kommt es zwischen den Elektroden 2, 3 zu einer elektrischen Kontaktierung in Form von Funkenschlag, wodurch die Assistenzelektrode 2 und das keramische Material des Bauteils 1 in einem Bearbeitungsbereich 6 verdampft und damit abgetragen werden, um eine Öffnung 8 auszubilden. Durch die Funkenentladung werden außerdem Teile des Dielektrikums 5 gecrackt, und die entstehenden Crackprodukte lagern sich dann in Form einer elektrisch leitenden Schicht 7 auf dem Bauteil 1 ab. Die Ablagerung erfolgt im Bearbeitungsbereich 6, wobei die abgeschiedene Schicht 7 die Assistenzelektrode 2 ersetzt, so dass es bei einer Fortsetzung des Verfahrens zu einem Funkenschlag zwischen der abgeschiedenen Schicht 7 und der Arbeitselektrode kommt und in der Folge die abgeschiedene Schicht 7 sowie das keramische Material des Bauteils 1 weiter abgetragen werden, wobei die abgetragenen Bereiche der Schicht 7 kontinuierlich wieder durch die Crackprodukte aufgefüllt werden.

Wenn die funkenerosive Bearbeitung beendet ist, werden die elektrischen Verbindungen zu dem Generator 4 gelöst, die Arbeitselektrode 3 aus dem Bearbeitungsbereich 6 entfernt und das Bauteil 1 aus dem Dielektrikum 5 entnommen. Das Bauteil 1 kann durch Abspülen oder Absprühen grob vorgereinigt werden oder auch direkt einer oxidativen Wärmebehandlung unterzogen werden. Dazu kann es beispielsweise mit der darauf aufgebrachten Assistenzelektrode 2 in einer oxidierenden Umgebung erhitzt werden. Bei Anwesenheit von Sauerstoff wird das metallische Zirkonium der Assistenzelektrode 2 in Zirkoniumoxid umgewandelt, das auch in dem Bauteil 1 enthalten ist. Auf diese Weise wird die Assistenzelektrode 2 in einen integralen Bestandteil des Bauteils 1 umgewandelt und stört so dessen Eigenschaften und Beschaffenheit nicht.

Falls die Assistenzelektrode 2 aus einer organischen Verbindung besteht, kann diese durch die oxidative Wärmebehandlung in gasförmige Verbindungen wie CO₂ und H₂O umgewandelt werden, die von selbst entweichen.

Die oxidative Wärmebehandlung kann insbesondere bei Turbinenschaufeln in einfacher Weise durch Ausbrennen oder durch Inbetriebnahme erfolgen.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf, die vorzugsweise mit dem erfindungsgemäßen Verfahren hergestellt werden.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf, die vorzugsweise mit dem erfindungsgemäßen Verfahren hergestellt werden.

Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.
Auch hier kann das erfindungsgemäße Verfahren zum Wiederöffnen von Löchern verwendet werden.

## Patentansprüche

1. Verfahren zur funkenerosiven Bearbeitung eines elektrisch nichtleitenden Materials (1),
bei dem auf dem elektrisch nichtleitenden Material (1) eine Schicht aus einer elektrisch leitenden Substanz als Assistenzelektrode (2) aufgebracht wird,
**dadurch gekennzeichnet, dass**
die elektrisch leitende Substanz nach der funkenerosiven Bearbeitung chemisch umgewandelt wird.

2. Verfahren nach Anspruch 1,
**dadurch gekennzeichnet, dass**
die elektrisch leitende Substanz durch oxidative Behandlung chemisch umgewandelt wird.

3. Verfahren nach Anspruch 2,
**dadurch gekennzeichnet, dass**
die elektrisch leitende Substanz durch oxidative Wärmebehandlung chemisch umgewandelt wird.

4. Verfahren nach einem der Ansprüche 1 bis 3,
**dadurch gekennzeichnet, dass**
die elektrisch leitende Substanz eine organische Verbindung, z.B. ein Polymer, ist.

5. Verfahren nach einem der Ansprüche 1 oder 4,
**dadurch gekennzeichnet, dass**
die elektrisch leitende Substanz durch die oxidative Wärmebehandlung in zumindest eine gasförmige Verbindung umgewandelt wird.

6. Verfahren nach Anspruch 5,
**dadurch gekennzeichnet, dass**
die elektrisch leitende Substanz chemisch umgewandelt und dann entfernt wird.

7. Verfahren nach einem der Ansprüche 1 bis 6,
**dadurch gekennzeichnet, dass**
das elektrisch nichtleitende Material (1) eine Keramik ist.

8. Verfahren nach Anspruch 7,
**dadurch gekennzeichnet, dass**
die Keramik ein Metalloxid enthält oder daraus besteht.

9. Verfahren nach Anspruch 8,
**dadurch gekennzeichnet, dass**
das Metalloxid Zirkoniumoxid ist.

10. Verfahren nach Anspruch 8 oder 9,
**dadurch gekennzeichnet, dass**
die elektrisch leitende Substanz ein Metall ist, das auch in dem Metalloxid enthalten ist.

11. Verfahren nach Anspruch 10,
**dadurch gekennzeichnet, dass**
das Metall während der funkenerosiven Bearbeitung beispielsweise durch vollständiges Bedecken mit einem nicht oxidierenden Dielektrikum (5) vor Oxidation geschützt wird.

12. Verfahren nach Anspruch 10 oder 11,
**dadurch gekennzeichnet, dass**
das Metall durch die oxidative Wärmebehandlung in das Metalloxid umgewandelt wird.

13. Verfahren nach den Ansprüchen 9 bis 11,
**dadurch gekennzeichnet, dass**
das Metall metallisches Zirkonium ist, das durch die oxidative Wärmebehandlung in Zirkoniumoxid umgewandelt wird.

14. Verfahren nach einem der Ansprüche 1 bis 13,
**dadurch gekennzeichnet, dass**
das elektrisch nichtleitende Material (1) eine Beschichtung auf einem Bauteil ist.

15. Verfahren nach Anspruch 14,
**dadurch gekennzeichnet, dass**
die Beschichtung eine Wärmedämmschicht ist.

16. Verfahren nach Anspruch 15,
**dadurch gekennzeichnet, dass**
die elektrisch leitende Substanz durch die oxidative Wärmebehandlung in einen integralen Bestandteil der Wärmedämmschicht umgewandelt wird.

17. Verfahren nach einem der Ansprüche 14 bis 16,
**dadurch gekennzeichnet, dass**
das Bauteil ein Teil einer Turbine oder einer Brennkammer ist.

18. Verfahren nach Anspruch 17,
**dadurch gekennzeichnet, dass**
das Bauteil eine Lauf- oder Leitschaufel ist.

19. Verfahren nach einem der Ansprüche 17 oder 18,
**dadurch gekennzeichnet, dass**
die oxidative Wärmebehandlung durch Ausbrennen oder Inbetriebnahme erfolgt.
